# EUROPÄISCHE PATENTSCHRIFT

(11) **EP 2 355 973 B1**
(45) Veröffentlichungstag und Bekanntmachung des Hinweises auf die Patenterteilung: **06.04.2016**
(21) Anmeldenummer: 09799238.2
(22) Anmeldetag: 02.11.2009
(51) Int. Cl.: B29C 67/00

(54) **VERFAHREN ZUM SCHICHTWEISEN AUFBAU VON KUNSTSTOFFMODELLEN**
METHOD FOR THE LAYERED CONSTRUCTION OF PLASTIC MODELS
PROCÉDÉ POUR UNE CONSTRUCTION EN COUCHES DE MODÈLES EN MATIÈRE PLASTIQUE

(30) Priorität: 20.11.2008 DE 102008058378
(43) Veröffentlichungstag der Anmeldung: 17.08.2011
(73) Patentinhaber: voxeljet AG, 86316 Friedberg (DE)
(72) Erfinder: EDERER, Ingo, 82269 Geltendorf (DE); GÜNTHER, Johannes, 86199 Augsburg (DE); GÜNTHER, Daniel, 80637 München (DE); GNÜCHTEL, Ingo, 86504 Merching (DE)
(74) Vertreter: Helbig, Christian
(86) Internationale Anmeldenummer: PCT/DE2009/001528
(87) Internationale Veröffentlichungsnummer: WO 2010/057457

(56) Entgegenhaltungen:
- EP-A1- 1 935 652
- EP-A2- 1 163 999
- WO-A2-01/34371
- DE-A1-102006 040 305

## Beschreibung

Generative Verfahren zur Herstellung von 3D-Strukturen, insbesondere aus Kunststoff, sind seit langer Zeit bekannt. Diese Verfahren umfassen beispielsweise Verfahren wie die Stereolithographie, bei der monomere Flüssigkeiten mit einem energiereichen Strahl verfestigt werden. Weiterhin ist das selektive Lasersintern bekannt, bei dem Partikelmaterial mit einem energiereichen Strahl verschmolzen wird. Ferner ist aus dem Stand der Technik das 3D-Druckverfahren, das auch Rapid-Prototyping genannt wird, bekannt.

Alle, diese bekannten Verfahren erlauben eine vergleichsweise wirtschaftliche Herstellung von Formen für den Prototypenbau.

Werden bei einem 3D-Druckverfahren Druckvorrichtungen mit mehreren ansteuerbaren Düsen eingesetzt, so zeigt sich dieses Verfahren allen anderen überlegen, da mit ihm viel höhere Baugeschwindigkeiten erreicht werden können. Mit einem solchen Verfahren ist somit die Anwendung nicht nur auf den Prototypenbereich eingeschränkt, vielmehr können sogar Serienbauteile wirtschaftlich erzeugt werden.

Weiterhin sind aus dem Stand der Technik noch weitere Verfahren bekannt. So gibt es bspw. Systeme, die vollständig flüssigkeitsbasierend arbeiten und Systeme, die Pulvermaterialien verwenden, die durch Flüssigkeitseintrag selektiv verfestigt werden.

Die erstgenannten, rein auf Flüssigkeiten basierenden Systeme sind beispielsweise aus der US 6,259,962 der Fa. Objet Geometries Ltd. bekannt. Dieses Verfahren basiert darauf, dass bei der Verfestigung zwei unterschiedliche Materialien generiert werden. Das schichtweise erzeugte Modell kann dann nach dem Druckprozess vom Stützmaterial durch einen Löseverfahren, - beispielsweise ein Wasserbad - freigesetzt werden.

DE 10 2006 040 305 A1 offenbart ein verfahren gemäß dem Oberbegriff des Anspruchs 1.

Die Verfestigung der anfangs für das Verdrucken flüssigen Materialien kann beispielsweise über UV-Strahlung erfolgen. Zudem können Zwei- oder Mehrkomponentensysteme eingesetzt werden, die auf der Bauplattform zusammen gebracht werden und verfestigen. Da das komplette Bauvolumen über Tintenstrahldrucker erzeugt werden muss, ist dieses Verfahren aber vergleichsweise langsam und daher nur für kleinere Bauteile geeignet.

Eine insbesondere bezüglich der Zeitintensität wesentlich wirtschaftlichere Alternative bilden die Verfahren zum schichtweisen Aufbau von Modellen, die Partikelmaterial verwenden. Bei diesen Verfahren wird ein pulverförmiges Material selektiv verbunden. Das Partikelmaterial wird beispielsweise mit einem Beschichter in dünnen Lagen auf eine Werkstückplattform auf gebracht und geglättet. Ein Druckkopf verfestigt anhand von den in Rechner hinterlegten Bauteildaten selektive Bereiche auf der Pulverschicht. Dieser Vorgang wird immer wieder wiederholt, bis das Bauteil fertiggestellt ist und aus dem unverfestigten Partikelmaterial entnommen werden kann.

Ein Vorteil hierbei ist, dass ein Teil des Bauteilmaterials bereits durch das Volumen des Partikelmaterials bereit gestellt wird. Die Menge, die flüssig mittels eines Druckers eindosiert werden muss, ist also vergleichsweise gering. So erlaubt dieses Verfahren hohe Druckkopfgeschwindigkeiten, geringe Schichtzeiten und einen - vergleichsweise - einfachen Druckkopfaufbau.

Die Art der Verfestigung des flüssigen Materials wird durch das Materialsystem, also der Kombination von Pulver und eindosierter Flüssigkeit bestimmt.

Es sind allgemein zwei Systeme denkbar:
1. Die Flüssigkeit bindet mit einer im Pulver enthalten Komponente ab oder
2. das Pulver ist passiv und die Flüssigkeit härtet aus, beispielsweise durch weitere oder äußere Komponenten, wie beispielsweise Strahlung.

Die unter 2. genannten Systeme können, wie folgt, weiter untergegliedert werden:
- Kristallisationssysteme (anorganische Systeme)
- Polymerisierende Systeme (organische Materialien)
- Lösemittelsysteme

In anorganischen Systemen kann beispielsweise Wasserglas flüssig auf das Partikelmaterial dosiert werden und durch eine zweite Komponente z. B. CO₂ - Gas verfertigt werden. Als "Basispulver" bzw. Partikelmaterial sind vielerlei Stoffe denkbar, so beispielsweise Sand (SiO₂), Korund, Zirkone und verschiedenste weitere technische Keramiken. Zudem können Glaskugeln, Gips, pyrogene Kieselsäure, Zement oder auch Metalle verbunden werden. Die eindosierte Flüssigkeit, nämlich Binderflüssigkeit ist keineswegs auf Wasserglas beschränkt.

Bei polymerisierenden Systemen kann die verwendete Flüssigkeit als Ein- oder Mehrkomponentensystem ausgeführt sein. Bei Einkomponentensystemen muss zum Erreichen des flüssig/fest Phasenübergangs, ein äußerer Anstoß zur Verfestigung gegeben werden. Meist wird UV-Strahlung eingesetzt, mit der die gedruckte Schicht belichtet wird. Als Basisfluide eignen sich radikalisch polymerisierende Monomere mit UV-Initiator, Epoxidharze, Urethane und sonstige Systeme die mit äußerer Anregung in Gang gesetzt werden können.

Bei der Verwendung mehrerer getrennter Fluide können Mehrkomponentenmaterialien verwendet werden. Sie verfestigen beispielsweise durch eine chemische Reaktion beim Aufeinandertreffen im Baufeld. Einsetzbar sind zahlreiche Reaktivsysteme bei denen durch anfängliche Trennung der Komponenten ein dauerhafter Einsatz im Bauprozess möglich wird.

Bei einem Einsatz von Lösemittelsystemen verfestigen diese durch Abdampfen des Lösemittels unter Bildung einer tragfähigen Schicht des gelösten Stoffes. Es sind hierbei zahlreiche Kombinationen von Werkstoffen möglich.

Die Systeme, die die Pulverkomponente in den Verfestigungsprozess einbeziehen, können ebenfalls weiter untergliedert werden:
- Umkristallisation
- Lösemittelkleber
- Mehrkomponenten Polymerisationssystem

So können pulverförmige anorganische Stoffe durch geeignete Lösemittel aufgelöst werden. Nach dem Abtrocknen des Lösemittels erfolgt eine Neubildung eines Kristalls. Diesen Effekt kann man sich zu Nutze machen, indem grobe Körner durch gezielt niedrigen Flüssigkeitseintrag an ihren Berührungspunkten verbunden werden. Solche Systeme verwendet beispielsweise die Firma Z-Corp. Siehe hierzu beispielsweise DE 697 06 374 T2 oder auch US 5,902,441.

Einen ähnlichen Effekt kann man in organischen Systemen erzielen. Ein Lösen von als Partikelmaterial aufgetragenen Polymeren und anschließendes Wiederverfestigen durch Abdampfen kann ebenso genutzt werden, um vergleichsweise grobe Partikel miteinander zu verbinden.

Bei polymerisierenden Systemen, die eine Komponente im Pulver enthalten, kann eine vergleichsweise einfache Druckflüssigkeit verwendet werden. Die Komponente im Pulver kann dabei eine Feststoffbeschichtung oder eine flüssige Umhüllung sein. Zudem kann sie sich im Pulverkorn befinden. Bei allen geschilderten Formen verfestigt die Flüssigkeit nach dem Eindrucken das Partikelmaterial. Je nach Eigenschaft des Systems weist die Verfestigung einen speziellen Zeitverlust auf.

Die Eignung eines Flüssigkeitssystems für einen Einsatz in einen 3D-Drucksystem mit einem reaktivem Partikelmaterial wird durch die Eigenschaften Löseeigenschaft, Viskosität, Dampfdruck, Polymerisationsschwund und oder Polymerisationsumsatz beurteilt.

Je nach Art des verwendeten Partikelmaterials muss die Druckflüssigkeit die Partikel lösen können, um eine zweite Komponente freizusetzen und so die Verfestigungsreaktion zu starten. Die Viskosität der Flüssigkeit muss für den hier beschriebenen Prozess auch zum Verdrucken mit einem Tintenstrahldruckkopf geeignet sein.

Je nach Größe und Form des Bauteils dauert es eine bestimmte Zeit, bis darüber wieder eine Partikelschicht aufgetragen wird. Hierbei ist es zudem wichtig, dass nicht zu viel der eindosierten Flüssigkeit durch Abdampfen verloren geht, da ansonsten kein Schichtverbund mehr möglich ist.

Eine entscheidende Größe für die Genauigkeit beziehungsweise Formtreue der Bauteile ist der Polymerisationsschwund. Dieser sollte möglichst gering Ausfallen. Weiterhin sollte der Umsatz der Flüssigkeit im Vergleich zum Polymer hoch sein, um feste, leicht handzuhabende Bauteile zu erhalten.

Es ist daher Aufgabe der vorliegenden Erfindung ein Verfahren zum schichtweisen Aufbau von Modellen bereitzustellen mit dem es möglich ist genau diese vorhergehenden Voraussetzungen bestmöglich zu erfüllen, das heißt insbesondere gute Löseeigenschaften und eine bestmögliche Formstabilität zu gewährleisten.

Diese Aufgabe wird gelöst, durch ein Verfahren nach Anspruch 1 zum schichtweisen Aufbau von Kunststoffmodellen, wobei auf eine Bauplattform ein erstes Material und daran anschließend selektiv ein zweites Material jeweils schichtweise aufgetragen wird und diese beiden Auftragungsschritte wiederholt werden, bis ein gewünschtes Modell erhalten wird. Die beiden Materialien bilden bei einem geeigneten Mischungsverhältnis einen Festkörper, das erste Material weist ein Partikelmaterial auf und das zweite Material wird über einen Druckkopf aufgetragen und weist N-Vinylformamid auf.

Ferner wird diese Aufgabe durch die Verwendung nach Anspruch 6 von N-Vinylformamid bei einem Verfahren zum schichtweisen Aufbau von Modellen gelöst.

Völlig überraschend wurde gefunden dass N-Vinylformamid die oben genannten Eigenschaften in idealer Weise erfüllt. Bisher wird N-Vinylformamid für dieses Einsatzzweck nicht genutzt sondern ist einzig als Beschichtungsmaterial in der Papierindustrie bekannt, wobei es dabei bisher für eine kationische Polymerisationsreaktion verwendet wurde.

Durch die extrem guten Löseeigenschaften erfolgt ein sehr schnelles Anlösen des Partikelmaterials, wobei das ausgelöste Material aber formstabil bleibt, was zu einer sehr guten Kantenschärfe führt. Zudem hat es sich als besonders vorteilhaft erwiesen, dass N-Vinylformamid keine kancerogene Eigenschaften aufweist.

Darüberhinaus hat es sich gemäß einer bevorzugten Ausführungsform als vorteilhaft gezeigt, wenn als erstes Material ein ein PMMA aufweisendes Partikelmaterial verwendet wird.

Weiterhin können gemäß einer weiteren bevorzugten Ausführungsform dem Partikelmaterial ferner ein Initiator und/oder ein Vernetzer und/oder ein Beschleuniger zugesetzt werden.

Hierbei kann es gemäß einer bevorzugten Ausführungsform des erfindungsgemäßen Verfahrens von Vorteil sein, dass N-Vinylformamid der Hauptbestandteil des zweiten Materials ist. Ebenso wäre es aber auch denkbar, dass das zweite Material zusätzlich einen Initiator, Beschleuniger oder/und Vernetzer aufweist.

Bei einer Verwendung von N-Vinylformamid bei einem Verfahren zum schichtweisen Aufbau von Modellen kann gemäß einer besonders bevorzugten Ausführungsform der vorliegenden Erfindung auf eine Bauplattform ein Partikelmaterial und daran anschließend selektiv über einen Druckkopf ein N-Vinylformamid jeweils schichtweise aufgetragen werden und diese beiden Auftragungsschritte wiederholt werden, bis ein gewünschtes Modell erhalten wird.

Weist darüberhinaus gemäß einer weiteren Ausführungsform das Partikelmaterial PMMA auf, so können besonders formtreue Bauteile aufgebaut werden.

Es hat sich auch gezeigt, dass es gemäß einer bevorzugten Ausführungsform vorteilhaft sein kann, wenn zusätzlich zum N-Vinylformamid ein Initiator, Beschleuniger oder/und Vernetzer über den Druckkopf aufgetragen wird.

Im Folgenden wird die Erfindung zur weiteren Erläuterung anhand von Ausführungsbeispielen beschrieben, auf die sie aber keineswegs eingeschränkt sein soll.

Beispielhaft soll nachfolgend eine Rezeptur für den 3D-Druck gemäß der vorliegenden Erfindung beschrieben werden.

Dabei kommt eine Kombination aus PMMA-Partikelmaterial als erstem Material, das den Initiator Dibenzoylperoxid enthält und aus dem Vinylmonomer N-Vinylformamid als zweitem Material zum Einsatz. Es wird also Dibenzoylperoxid enthaltendes PMMA-artikelmaterial mittels einer Dosiervorrichtung auf eine Werkstückplattform flächig aufgetragen, wie dies aus anderen Rapid-Prototypingverfahren bekannt ist, und daran anschließend wird auf vorgegebene, dem zu bildenden Bauteil entsprechende Bereiche mittels einer Düse N-Vinylformamid aufgebracht. Die Steuerung der Düse erfolgt üblicherweise über Computerdaten und das Aufbringen erfolgt häufig mittels eines Tintenstrahldruckkopfes.

Die Verfestigung der beiden Materialien geschieht bei einem solchen Verfahren nicht über kationische, sondern über radikalische Polymerisation an der Doppelbindung des Vinylmonomers. Die Spaltung des Initiators zu Startradikalen für die Kettenreaktion erfolgt in klassischer Weise über geeignete tertiäre Amine, - wie z.B. N,N-Dimethyl-p-toluidin, N-N-Di-(2-hydroxy-ethyl)-p-toluidin, N,N-Dimethylanilin, N,N-Diethylanilin, usw. - wird aber durch N-Vinylformamid zusätzlich katalysiert. Bei einer solchen Rezeptur kann in manchen Fällen auf den sonst häufig eingesetzten Katalysator verzichtet werden.

Wird gemäß einer beschriebenen bevorzugten Ausführungsform zusätzlich ein Vernetzer verwendet, so kann eine Schwundreduzierung erreicht werden. Als besonders geeignet hat sich ein bifunktionelles Acrylat - wie z.B. vom Typ Photomer 4025, 4028, 6210, 4172F, usw. - erwiesen. Ein solcher Vernetzer steigert zusätzlich die Viskosität von N-Vinylformamid und kann deshalb auch zum Einstellen der erwünschten Eigenschaften des aufgebauten Modells verwendet werden.

Weiterhin können auch folgende Produkte verwendet werden: Sartomer SR 601E (entspricht Photomer4028F), Sartomer SR 602 und Sartomer SR 349.

Eine Beschleunigung des Polymerisationsvorgangs kann durch die Zugabe von metallorganischen Beschleunigern wie z.B. Co-, Al-, Zn-, Zr-, V-, Ti-, Y-, Nb-, Fe-, Mn-, Pd-, Pt-, Ru-, Mo-, Cu-, Cr-, Ni- oder Cd-octoaten Naphtenaten und Acetylacetonaten erreicht werden.

Die mit diesen beispielhaft angegebenen Materialien erzeugten Bauteile weisen gegenüber den bisher verwendeten Materialien zum Aufbau eines Kunststoffbauteiles einen niedrigen Verzug und eine hohe Kantenschärfe auf. Ein niedriger Dampfdruck verhindert zudem Anisotropien der Bauteile, da durch das geringe Abdampfen der Druckflüssigkeit, im speziellen des N-Vinylformamids, das eingetragene Material polymerisieren kann, womit die Handhabbarkeit des Systems wesentlich erleichtert werden kann.

## Patentansprüche

1. Verfahren zum schichtweisen Aufbau von Kunststoffmodellen, wobei auf eine Bauplattform ein erstes Material und daran anschließend selektiv ein zweites Material jeweils schichtweise aufgetragen wird und diese beiden Auftragungsschritte wiederholt werden, bis ein gewünschtes Modell erhalten wird;
die beiden Materialien bei einem geeigneten Mischungsverhältnis einen Festkörper bilden und
das erste Material ein Partikelmaterial aufweist,
**dadurch gekennzeichnet, dass** das zweite Material über einen Druckkopf aufgetragen wird und n-Vinylformamid aufweist.

2. Verfahren nach Anspruch 1, wobei als erstes Material ein ein PMMA aufweisendes Partikelmaterial verwendet wird.

3. Verfahren nach einem der vorhergehenden Ansprüche, wobei das Partikelmaterial ferner einen Initiator und/oder einen Vernetzer und/oder einen Beschleuniger aufweist.

4. Verfahren nach einem der vorhergehenden Ansprüche, wobei N-Vinylformamid der Hauptbestandteil des zweiten Materials ist.

5. Verfahren nach einem der vorgehenden Ansprüche, wobei das zweite Material zusätzlich einen Initiator, Beschleuniger oder/und Vernetzer aufweist.

6. Verwendung von N-Vinylformamid beim schichtweisen Aufbau von Modellen, wobei auf eine Bauplattform ein Partikelmaterial und daran anschließend selektiv über einen Druckkopf ein N-Vinylformamid jeweils schichtweise aufgetragen wird und diese beiden Auftragungsschritte wiederholt werden, bis ein gewünschtes Modell erhalten wird.

7. Verwendung von N-Vinylformamid gemäß Anspruch 6 beim schichtweisen Aufbau von Modellen, wobei das Partikelmaterial PMMA aufweist.

8. Verwendung von N-Vinylformamid gemäß Anspruch 6 oder 7 beim schichtweisen Aufbau von Modellen, wobei zusätzlich zum N-Vinylformamid ein Initiator, Beschleuniger oder/und Vernetzer über den Druckkopf aufgetragen wird.

## Claims

1. A method for the layered construction of plastic models, wherein a first material and then, selectively, a second material are each coated in layers on a construction platform, and said two coating steps are repeated until a desired model is obtained; both materials, in a suitable mixing ratio, form a solid and the first material includes a particulate material,
**characterized in that** the second material is coated via a print head and includes N-vinylformamide.

2. The method according to claim 1, wherein a particulate material including PMMA is used as the first material.

3. The method according to any one of the preceding claims, wherein the particulate material further includes an initiator and/or a cross-linking agent and/or an accelerator.

4. The method according to any one of the preceding claims, wherein N-vinylformamide is the main constituent of the second material.

5. The method according to any one of the preceding claims, wherein the second material additionally includes an initiator, accelerator or/and cross-linking agent.

6. The use of N-vinylformamide in the layered construction of models, wherein a particulate material and then, selectively, N-vinylformamide are coated in layers on a construction platform via a print head, and said two coating steps are repeated until a desired model is obtained.

7. The use of N-vinylformamide according to claim 6 in the layered construction of models, wherein the particulate material includes PMMA.

8. The use of N-vinylformamide according to claim 6 or 7 in the layered construction of models, wherein an initiator, accelerator or/and a cross-linking agent is coated via the print head in addition to the N-vinylformamide.

## Revendications

1. Procédé de construction de modèles en plastique par couches, dans lequel un premier matériau et puis, de manière sélective, un deuxième matériau sont chacun appliqués par couches sur une plateforme de construction, ces deux étapes d'application étant répétées jusqu'à obtenir un modèle désiré;
les deux matériaux, dans un rapport de mélange approprié, constituant un solide et le premier matériau comportant un matériau en particules,
**caractérisé en ce que** le deuxième matériau est appliqué par une tête d'impression et comporte le N-vinylformamide.

2. Procédé selon la revendication 1, dans lequel un matériau en particules comportant le PMMA est utilisé comme premier matériau.

3. Procédé selon l'une quelconque des revendications précédentes, dans lequel le matériau en particules comporte en outre un initiateur et/ou un agent de réticulation et/ou un accélérateur.

4. Procédé selon l'une quelconque des revendications précédentes, dans lequel le N-vinylformamide est le constituant principal du deuxième matériau.

5. Procédé selon l'une quelconque des revendications précédentes, dans lequel le deuxième matériau comporte en outre un initiateur, un accélérateur ou/et un agent de réticulation.

6. Utilisation de N-vinylformamide dans la construction de modèles par couches, dans lequel un matériau en particules et puis, de manière sélective, le N-vinylformamide sont chacun appliqués par couches en utilisant une tête d'impression, ces deux étapes d'application étant répétées jusqu'à obtenir un modèle désiré.

7. Utilisation de N-vinylformamide selon la revendication 6 dans la construction de modèles par couches, dans lequel le matériau en particules comporte le PMMA.

8. Utilisation de N-vinylformamide selon la revendication 6 ou 7 dans la construction de modèles par couches, dans lequel un initiateur, un accélérateur ou/et un agent de réticulation est appliqué, en plus du N-vinylformamide, par la tête d'impression.
